# EUROPÄISCHE PATENTSCHRIFT

(11) **EP 3 069 570 B1**
(45) Veröffentlichungstag und Bekanntmachung des Hinweises auf die Patenterteilung: **13.12.2017**
(21) Anmeldenummer: 15707055.8
(22) Anmeldetag: 13.02.2015
(51) Int. Cl.: H05B 7/148

(54) **VORRICHTUNG UND VERFAHREN ZUR DYNAMISCHEN EINSTELLUNG EINES ELEKTROLICHTBOGENOFENS**
APPARATUS AND METHOD FOR DYNAMICALLY ADJUSTING AN ELECTRIC ARC FURNACE
DISPOSITIF ET PROCÉDÉ DE RÉGLAGE DYNAMIQUE D'UN FOUR À ARC ÉLECTRIQUE

(30) Priorität: 31.03.2014 DE 102014206008
(43) Veröffentlichungstag der Anmeldung: 21.09.2016
(73) Patentinhaber: Siemens Aktiengesellschaft, 80333 München (DE)
(72) Erfinder: DÖBBELER, Arno, 91074 Herzogenaurach (DE); HARTMANN, Werner, 91085 Weisendorf (DE); HERGT, Martin, 90411 Nürnberg (DE); RUPP, Jürgen, 91056 Erlangen (DE)
(86) Internationale Anmeldenummer: PCT/EP2015/053063
(87) Internationale Veröffentlichungsnummer: WO 2015/149980

(56) Entgegenhaltungen:
- EP-A1- 2 497 747
- WO-A1-93/14557
- FR-A- 1 299 494
- GB-A- 584 007

## Beschreibung

Die vorliegende Erfindung betrifft eine Vorrichtung zur dynamischen Regelung eines Elektrolichtbogenofens gemäß dem Oberbegriff des Hauptanspruchs und ein entsprechendes Verfahren.

Ein Elektrolichtbogen, insbesondere bei einer dreiphasigen Wechselstromversorgung, führt über drei Graphitelektroden elektrische Energie in Form von Lichtbögen einem Schmelzofen zu. Ein derartiger Schmelzofen ist beispielsweise ein Electric Arc Furnace EAF. Dazu wird in der Regel mit Hilfe eines Ofentransformators die Mittel- oder Hochspannung in eine Niederspannung heruntertransformiert und auf die Elektroden geführt. Die Elektroden können mechanisch nach oben bzw. unten verfahren werden, um den Lichtbogen zu zünden und anschließend über den Abstand die Bogenspannung und den Strom und somit die eingekoppelte Leistung einzustellen. Da der Strom in jeder Phase zweimal pro Periode zu Null wird, besteht die Gefahr, dass der Lichtbogen verlischt, wenn nicht ein Strom in entgegengesetzter Richtung mit ausreichend hoher Stromsteilheit aufgebaut wird, bevor sich das vorhandene Plasma zu weit abkühlt.

Herkömmlicherweise wird mittels einer ausreichend großen Induktivität in dem Stromkreis dafür gesorgt, dass der Strom so weit nacheilt, dass im Stromnulldurchgang die Spannung bereits groß genug ist, um den Stromfluss aufrecht zu erhalten. Dies führt dazu, dass der Lichtbogenofen nur bis zu einem bestimmten Leistungsfaktor cos ϕ betrieben werden kann und einen hohen Blindleistungsbedarf hat. Typische Werte für den Leistungsfaktor liegen bei etwa 0,83, was mit einem Transformator mit 100 MVA Scheinleistung einen Wirkleistungseintrag von 83 MW und eine Blindleistung von 56 MVAr ergibt. Die elektrischen Betriebsmittel können damit nicht optimal ausgenützt werden. Herkömmlicherweise liegt eine Regelung eines Lichtbogenofens im Sekundenbereich, und zwar bedingt durch das mechanische Verfahren der Elektroden.

Die EP 2 497 747 A1 offenbart ein Verfahren und eine Vorrichtung zur Herstellung von Silizium durch eine Kohlenreduktion in einem Lichtbogenofen unter Verwendung von Rohsilikat-Material mit einem Eisen-, einem Aluminium-, einem Kalzium- und einem Titananteil mit Kohlenstoffmaterial.

Es ist Aufgabe der vorliegenden Erfindung bei einem Elektrolichtbogenofen eine herkömmliche Phasenverschiebung zwischen Strom und Spannung zu verringern und damit einen Leistungsfaktor zu vergrößern und einen Blindleistungsanteil zu verkleinern, wobei ein Verlöschen des dazugehörigen Lichtbogens vermieden wird. Es soll lediglich ein Ofentransformator ohne einen herkömmlichen zur Einstellung einer Sekundärspannung verwendeten Stufenschalter und eine relativ zum Stand der Technik kleine Kompensationsanlage erforderlich sein. Es soll die Spannung an den Elektroden stufenlos und hochdynamisch einstellbar sein, und zwar insbesondere asymmetrisch. Es soll eine schnelle und damit dynamische Regelung eines Lichtbogens im Millisekunden-Bereich ausführbar sein, insbesondere ebenso zur Reduzierung von Flicker. Es soll eine verbesserte Leistungseinkopplung und ein breiter Arbeitsbereich des Lichtbogens, insbesondere ein breiter Bereich der Stabilität des Lichtbogens geschaffen werden. Neben dem Vermeiden des unerwünschten Abreißens des Stromes soll ebenso die Wahrscheinlichkeit von internen Überschlägen aufgrund des Auftretens von unkontrollierten Überspannungen minimiert sein. Das Volumen eines Ofentransformators soll verkleinerbar sein.

Die Aufgabe wird mit einer Vorrichtung gemäß den Merkmalen des Hauptanspruchs und ein entsprechendes Verfahren gemäß den Merkmalen des Nebenanspruchs gelöst.

Gemäß einem ersten Aspekt wird eine Vorrichtung zur dynamischen Regelung eines an ein Leistungsversorgungsnetz elektrisch angeschlossenen Elektrolichtbogenofens mit mindestens einer Netzphase vorgeschlagen, mittels der an eine Ofenelektrode eine elektrische Wechselspannung mit einer Amplitude und einer Frequenz zur Erzeugung eines zum Schmelzen benötigten Lichtbogenstroms mit einer Amplitude und einer Frequenz angelegt wird, wobei eine Regelkreiseinrichtung der Amplitude und/oder der Frequenz der Wechselspannung zu der Amplitude und/oder der Frequenz des Lichtbogenstroms ausgebildet ist, der Umrichter ein ein Eingangs-Tor und ein Ausgangs-Tor aufweisendes Zweitor ist, wobei an dem Eingangs-Tor eine Netzleistungsversorgung und an dem Ausgangs-Tor eine Schmelzofenleistungsversorgung angeschlossen ist, an dem Ausgangs-Tor ein Primärkreis eines ersten Transformators elektrisch angeschlossen ist, in dessen Sekundärkreis die Ofenelektrode des Elektrolichtbogenofens elektrisch angeschlossen ist, wobei eine Primärspule eines zweiten Transformators elektrisch parallel zu dem Eingangs-Tor des Umrichters geschaltet ist und eine Sekundärspule des ersten Transformators elektrisch in Serie zu einer Sekundärspule des zweiten Transformators geschaltet ist.

Gemäß einem zweiten Aspekt wird ein Verfahren zur dynamischen Regelung eines an ein Leistungsversorgungsnetz elektrisch angeschlossenen Elektrolichtbogenofens mit mindestens einer Netzphase, mittels der an eine Ofenelektrode eine elektrische Wechselspannung mit einer Amplitude und einer Frequenz angelegt und ein zum Schmelzen benötigter Lichtbogenstrom mit einer Amplitude und einer Frequenz zugeführt wird, wobei eine Regelkreiseinrichtung die Amplitude und/oder die Frequenz der Wechselspannung oder Amplitude und/oder der Frequenz des Lichtbogenstroms gegengekoppelt regelt, wobei der Umrichter ein Eingangs-Tor und ein Ausgangs-Tor aufweisendes Zweitor ist, wobei an dem Eingangs-Tor eine Netzleistungsversorgung und an dem Ausgangs-Tor eine Schmelzofenleistungsversorgung angeschlossen ist, an dem Ausgangs-Tor ein Primärkreis eines ersten Transformators elektrisch angeschlossen ist, in dessen Sekundärkreis die Ofenelektrode des Elektrolichtbogenofens elektrisch angeschlossen ist, wobei eine Primärspule eines zweiten Transformators elektrisch parallel zu dem Eingangs-Tor des Umrichters geschaltet ist und eine Sekundärspule des ersten Transformators elektrisch in Serie zu einer Sekundärspule des zweiten Transformators geschaltet ist.

Erfindungsgemäß wird über einen Wechselrichter eine zum Schmelzen benötigte Energie dem Lichtbogen zugeführt, damit dieser nicht erlischt. Es wird die vorteilhafte Verwendung eines Umrichters, der insbesondere ein Wechselrichter sein kann, vorgeschlagen. Die Vorteile gemäß der vorliegenden Erfindung sind eine schnelle dynamische Regelung, insbesondere im Millisekunden-Bereich zur Erhöhung des Leistungsfaktors einer Phase bei einer wirksamen Stabilisierung des Lichtbogens und der Möglichkeit einer Flickerreduzierung.

Beispielsweise kann die erfindungsgemäße Regelkreiseinrichtung die Amplitude und/oder die Frequenz der Wechselspannung als Stellgröße bzw. Stellgrößen und die Amplitude und/oder die Frequenz des Lichtbogenstroms als Regelgröße bzw. Regelgrößen verwenden. Grundsätzlich kann alternativ die Amplitude und/oder die Frequenz der Wechselspannung als Regelgröße von der Amplitude und/oder der Frequenz des Lichtbogenstroms als Stellgröße (n) geregelt werden.

Wesentlich ist, dass beispielsweise ein Leistungsabfall aufgrund des Lichtbogenstroms durch eine Leistungszufuhr mittels der Wechselspannung kompensierbar ist. Grundsätzlich kann es ebenso umgekehrt sein.

Weitere vorteilhafte Ausgestaltungen werden in Verbindung mit den Unteransprüchen beansprucht.

Gemäß einer vorteilhaften Ausgestaltung kann die Regelkreiseinrichtung mittels eines elektrischen Umrichters die Amplitude und/oder die Frequenz der Wechselspannung zu der Amplitude und/oder der Frequenz des Lichtbogenstroms gegengekoppelt regeln.

Gemäß einer weiteren vorteilhaften Ausgestaltung kann mittels des Umrichters die Amplitude und/oder die Frequenz der elektrischen Wechselspannung bei einem Verkleinern der Amplitude und/oder der Frequenz des Lichtbogenstroms vergrößert werden. Besonders vorteilhaft können zur Vermeidung eines Abreißens eines Lichtbogens der Umrichter die Amplitude und/oder die Frequenz der elektrischen Wechselspannung bei einem Nulldurchgang der Phase des Lichtbogens vergrößern. Dieses Vorgehen kann ebenso zur Vermeidung von Flicker angewendet werden.

Gegengekoppelt geregelt bedeutet, dass mittels der Regelkreiseinrichtung und eines elektrischen Umrichters die Amplitude und/oder die Frequenz der Wechselspannung bei einer Verkleinerung der Amplitude und/oder der Frequenz des Lichtbogenstroms vergrößerbar ist. Umgekehrt können zur Vermeidung von Überspannungen bei einer Vergrößerung der Amplitude und/oder der Frequenz des Lichtbogenstroms die Amplitude und/oder die Frequenz der Wechselspannung verkleinerbar sein.

Gemäß einer weiteren vorteilhaften Ausgestaltung kann der Umrichter eine Wechselgröße, und zwar die Wechselspannung oder den Wechselstrom, des Leistungsversorgungsnetzes phasensynchron in die entsprechende Wechselgröße der Ofenelektrode umrichten.

Gemäß einer weiteren vorteilhaften Ausgestaltung kann der Umrichter an eine beliebige Spannungsebene des elektrischen Leistungsversorgungsnetzes elektrisch angeschlossen werden.

Gemäß einer weiteren vorteilhaften Ausgestaltung kann der Umrichter ein Eingangstor und ein Ausgangstor aufweisendes Zweitor sein, wobei an dem Eingangstor eine Netzleistungsversorgung und an dem Ausgangstor eine Schmelzofen-Leistungsversorgung angeschlossen sein kann.

Ein Zweitor beschreibt ein elektrisches Netzwerk mit vier Anschlüssen, bei dem je zwei Anschlüsse zu einem so genannten Tor zusammengefasst werden. Ein Tor liegt dann vor, wenn der elektrische Strom durch beide Anschlüsse eines Tors gegengleich ist (Torbedingung). Ein Zweitor ist damit eine spezielle Form eines Vierpols.

Gemäß einer weiteren vorteilhaften Ausgestaltung kann der Umrichter ein Zweipunkt-Umrichter oder ein Mehrpegel-Umrichter oder ein Multilevel-Umrichter sein.

Gemäß einer weiteren vorteilhaften Ausgestaltung kann an dem Ausgangstor ein Primärkreis eines ersten Transformators elektrisch angeschlossen sein, in dessen Sekundärkreis die Ofenelektrode des Elektrolichtbogenofens elektrisch angeschlossen sein kann.

Gemäß einer weiteren vorteilhaften Ausgestaltung kann eine Primärspule eines zweiten Transformators elektrisch parallel zu dem Eingangstor des Umrichters geschaltet sein und eine Sekundärspule des ersten Transformators kann elektrisch in Serie zu einer Sekundärspule des zweiten Transformators geschaltet sein.

Gemäß einer weiteren vorteilhaften Ausgestaltung kann ein Verhältnis der primären elektrischen Nennleistung des ersten Transformators zu der des zweiten Transformators mittels entsprechender Dimensionierung eingestellt werden.

Gemäß einer weiteren vorteilhaften Ausgestaltung kann dieses Verhältnis zu 1:3 eingestellt werden.

Gemäß einer weiteren vorteilhaften Ausgestaltung kann der erste Transformator oder der zweite Transformator ein bereits vorhandener Ofentransformator sein.

Gemäß einer weiteren vorteilhaften Ausgestaltung kann der erste Transformator ein Hochsetzsteller oder Boost-Transformator sein.

Gemäß einer weiteren vorteilhaften Ausgestaltung kann der erste Transformator entfernt sein und das Ausgangstor des Umrichters kann elektrisch in Serie zu der Sekundärspule des zweiten Transformators und zur Ofenelektrode geschaltet sein.

Gemäß einer weiteren vorteilhaften Ausgestaltung kann der Elektrolichtbogenofen drei von drei Netzphasen leistungsversorgte Ofenelektroden, insbesondere Graphitelektroden, aufweisen, wobei mittels drei Umrichtern Amplituden und/oder Frequenzen geregelt werden können.

Gemäß einer weiteren vorteilhaften Ausgestaltung kann mittels der drei Umrichter eine getrennte Regelung von Amplituden und/oder Frequenzen ausgeführt werden.

Es kann über die Umrichter eine Leistungsaufteilung sehr schnell und flexibel angepasst werden. Beispielsweise kann die elektrische Leistung von einem stabil brennenden Lichtbogen auf einen anderen umverteilt werden, der andernfalls verlöschen würde. Es können die einzelnen Ofenelektroden je nach Auslegung des Umrichters mit verschiedenen Leistungen versorgt werden. Dies kann zusätzlich bei einer thermischen Symmetrierung des Lichtbogenofens wirksam ausgeführt werden.

Gemäß einer weiteren vorteilhaften Ausgestaltung kann zusätzlich eine Abstandseinrichtung für eine jeweilige Ofenelektrode deren Abstand zu einem Schmelzgut als einen Arbeitspunkt einstellen. Es wird mittels eines erforderlichen Verfahrens der Elektroden der Arbeitspunkt eingestellt, wobei mit der erfindungsgemäßen Regelung über den Umrichter Störungen hochdynamisch ausgeregelt werden können.

Gemäß einer weiteren vorteilhaften Ausgestaltung kann für jede Ofenelektrode ein Leistungsfaktor je Phase > 0,84 eingestellt werden.

Gemäß einer weiteren vorteilhaften Ausgestaltung kann die Regelung eines jeweiligen Lichtbogens im Millisekunden-Bereich ausgeführt werden.

Gemäß einer weiteren vorteilhaften Ausgestaltung kann zusätzlich bei einem Stromnulldurchgang zusätzlich ein Zündimpuls aufgeschaltet werden.

Die Erfindung wird anhand von Ausführungsbeispielen in Verbindung mit den Figuren näher beschrieben. Es zeigen:
- Figur 1: ein erstes Ausführungsbeispiel einer erfindungsgemäßen Vorrichtung;
- Figur 2: ein zweites Ausführungsbeispiel einer erfindungsgemäßen Vorrichtung;
- Figur 3: den Regelkreis zur erfindungsgemäßen Vorrichtung;
- Figur 4: ein Ausführungsbeispiel eines erfindungsgemäßen Verfahrens.

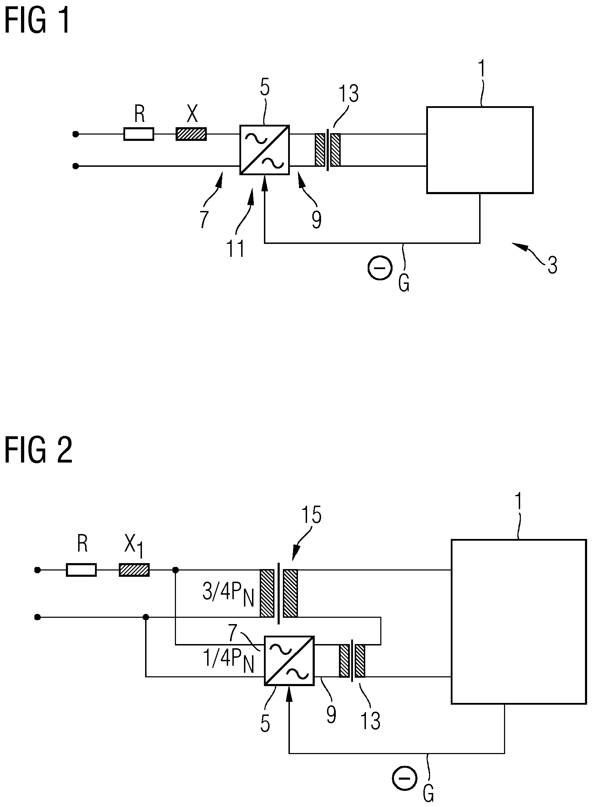

Figur 1 zeigt ein erstes Ausführungsbeispiel einer erfindungsgemäßen Vorrichtung. Gemäß dieser Vorrichtung kann ein in einem elektrischen Lichtbogenofen 1 erzeugter Lichtbogen dynamischer und flexibler im Vergleich zum Stand der Technik geregelt werden. Es wird phasensynchron über einen Umrichter 5 in Serie zu einem ersten Transformator 13, der ein bereits vorinstallierter Ofentransformator sein kann, die benötigte Energie dem entsprechenden Lichtbogen zugeführt, damit dieser nicht erlischt. Ebenso soll Flicker vermieden werden. Die erfindungsgemäße Vorrichtung ermöglicht ebenso das Vermeiden von Überspannungen. Alle Netzimpedanzen einschließlich des Umrichtertransformators sind in der dargestellten Impedanz R und X zusammengefasst. Figur 1 zeigt ein einphasiges Ersatzschaltbild eines Elektrolichtbogens 1, bei dem die gesamte Leistung, also 100 % über den Umrichter 5 geführt wird. Damit hat man volle Kontrolle über den Lichtbogenofen 1 einschließlich der Betriebsfrequenz und einer stufenlosen Spannungseinstellung von 0 bis 100%. Wenn der Elektrolichtbogenofen 1 eine höhere Betriebsfrequenz als 50 bzw. 60 Hz erlaubt, kann diese von dem Umrichter 5 aus der Netzfrequenz erzeugt und der nachgeschaltete erste Transformator 13 kleiner und kostengünstiger gebaut werden. Der erste Transformator 13 kann ein bereits dem Lichtbogenofen 1 zugeordneter Ofentransformator sein. G stellt die Rückkoppelschleife einer erfindungsgemäßen Regelkreiseinrichtung 3 dar. Da die Rückkoppelung hier eine Gegenkoppelung ist, ist die Rückkoppelungsschleife mit dem Bezugszeichen G gekennzeichnet.

Gemäß Figur 1 ist eine Netzphase eines Leistungsversorgungsnetzes an dem elektrisch angeschlossenen Lichtbogenofen 1 angeschlossen. Mittels dieser Netzphase wird an eine im Elektrolichtbogenofen angeordnete und hier nicht näher dargestellte Ofenelektrode mit einer elektrischen Wechselspannung mit einer Amplitude und einer Frequenz und mit einem zum Schmelzen benötigten Lichtbogenstrom mit einer Amplitude und einer Frequenz versorgt. Gemäß der vorliegenden Erfindung ist eine Regelkreiseinrichtung 3 geschaffen, die die Amplitude und/oder die Frequenz der Wechselspannung zu der Amplitude und/oder der Frequenz des Lichtbogenstroms gegenkoppelt. entsprechend kann bei einem Absinken der Amplitude und/oder der Frequenz des Lichtbogenstroms die Amplitude und/oder die Frequenz der Wechselspannung vergrößert werden. Ebenso kann bei einer zu großen Amplitude und/oder Frequenz der Wechselspannung die Amplitude und/oder die Frequenz des Lichtbogenstroms verkleinert werden. Auf diese Weise ein Erlöschen des Lichtbogens sowie die Überspannung vermieden werden. Die erfindungsgemäße Regelkreiseinrichtung 3 kann derart flexibel bereitgestellt werden, dass entweder die Wechselspannung, die Stellgröße und der Lichtbogenstrom die Regelgröße ist, oder dass umgekehrt der Lichtbogenstrom die Stellgröße und die Wechselspannung die Regelgröße ist. Bei Verwendung eines erfindungsgemäßen Umrichters 5 bietet sich insbesondere an, mit einer Einstellung von Amplitude und/oder Frequenz der Wechselspannung die Amplitude und/oder die Frequenz des Lichtbogenstroms zu regeln. Grundsätzlich können mittels eines erfindungsgemäßen Umrichters 5 entweder die Wechselspannung oder der Lichtbogenstrom eingeprägt werden. Entsprechend kann der Umrichter 5 dann als eine Spannungsquelle oder als eine Stromquelle betrachtet werden. Figur 1 zeigt eine Leistungsversorgung eines Lichtbogenofens über einen Umrichter. Der Umrichter 5 ist hier mit einem Umrichtertransformator 13 dargestellt, der ein Boost-Transformator sein kann. Die Vorteile gemäß einer Anordnung gemäß Figur 1 sind eine schnelle dynamische Regelung, insbesondere im Millisekunden-Bereich, eine Flickerreduzierung, eine Volumenreduktion des ersten Transformators 13, wobei bei Nutzung eines Ofentransformators die Stufenschalter an der Primärseite des Ofentransformators nicht mehr erforderlich sind. Gemäß Figur 1 ist eine schnelle, dynamische Regelung im gesamten Leistungsbereich ausführbar. Der Vorteil einer Anordnung gemäß Figur 1 ist ein erhöhter Dynamikbereich der schnellen Regelung im Vergleich zu einer in Figur 2 dargestellten Hybridlösung mit einem Ofentransformator und einem Wechselrichter. Der Umrichter 5 ist an eine beliebige Spannungsebene eines elektrischen Leistungsversorgungsnetzes elektrisch anschließbar. Der Umrichter 5 gemäß Figur 1 ist ein Zweitor 11, das ein Eingangstor 7 und ein Ausgangstor 9 aufweist. Am Eingangstor 7 liegt eine Netzleistung an und an dem Ausgangstor 9 wird eine Schmelzofenleistung ausgegeben.

Figur 2 zeigt ein zweites Ausführungsbeispiel einer erfindungsgemäßen Vorrichtung. An einem Ausgangstor 9 ist ein Primärkreis eines ersten Transformators 13 elektrisch angeschlossen, in dessen Sekundärkreis eine nicht dargestellte Ofenelektrode des Elektrolichtbogenofens 1 elektrisch angeschlossen ist. Im Unterschied zu Figur 1 ist eine Primärspule eines zweiten Transformators 15 elektrisch parallel zu dem Eingangstor 7 des Umrichters 5 geschaltet, wobei eine Sekundärspule des ersten Transformators 13 elektrisch in Serie zu einer Sekundärspule des zweiten Transformators 15 geschaltet ist. Die Sekundärspulen des ersten Transformators 13 und des zweiten Transformators 15 liefern die elektrische Wechselspannung an der Ofenelektrode und dem erforderlichen Lichtbogenstrom. Figur 2 zeigt ebenso ein einphasiges Ersatzschaltbild eines Elektrolichtbogenofens, bei dem ein Teil der Energie der Umrichter mit nachgeschaltetem Booth-Transformator oder Hochsetzsteller 13 zugeführt wird. Damit kann die elektrische Wechselspannung an der Ofenelektrode stufenlos und hochdynamisch von 50 bis 100 % eingestellt werden, und zwar ebenso asymmetrisch. Auch in Figur 2 sind alle Netzimpedanzen einschließlich des Ofentransformators 15 und des Umrichtertransformators 13 in der dargestellten Impedanz R, X zusammengefasst. Gemäß Figur 1 erfolgt eine Leistungsversorgung des Lichtbogenofens 1 über einen Ofentransformator 15 und einen Umrichter 5. Figur 2 zeigt, dass die Leistung beispielsweise zu75 % über den Ofentransformator 15 und zu 25 % über den Umrichtertransformator 13 dem Lichtbogenofen 1 zugeführt wird. Bedingt durch die elektrische Leistung aus dem Umrichter 5 können dynamische Eigenschaften des Lichtbogens im Millisekunden-Bereich geregelt werden. Ebenso kann die Flickererzeugung durch den Umrichter 5 beeinflusst werden. Beispielsweise kann in einem Stromnulldurchgang des Lichtbogenstroms ebenso ein kurzer Zündimpuls aufgeschaltet werden, um ein Verlöschen des Lichtbogens zu verhindern. Der Umrichter 5 generiert aus einer festen Mittelspannung des Leistungsversorgungsnetzes eine variable Mittelspannung. Der nachgeschaltete Transformator 13 transformiert die Spannung von der Mittel- zu einer Niederspannungsebene herab. Die Vorteile der gemäß Figur 2 dargestellten Vorrichtung sind folgende: Eine schnelle dynamische Regulierung im Millisekunden-Bereich, allerdings lediglich im Leistungsbereich des Umrichters 5, eine Flickerreduzierung, eine Volumenreduktion eines Ofentransformators 15, wobei an der primären Seite des Ofentransformators 15 kein Stufenschalter mehr erforderlich ist. Die erfindungsgemäße schnelle, dynamische Regelung verhindert das Abreißen des Lichtbogens, da die Leistung individuell dem Lichtbogen zugeführt werden kann. Die Flickerreduzierung besitzt den Vorteil, dass die Kompensationsanlage bei geringem Flicker entfallen kann. Der Umrichter 5 kann je nach Spannungsebene in unterschiedlichen Topologien realisiert werden, dabei kann er als Zweipunkt- sowie als Multilevel-Umrichter aufgebaut sein. Auch der nachgeschaltete Transformator 13 in Figur 2 hinter dem Umrichter 5 kann je nach Eigenschaften der Komponenten und Halbleiter Schalter entsprechend ausgelegt werden oder möglicherweise entfallen.

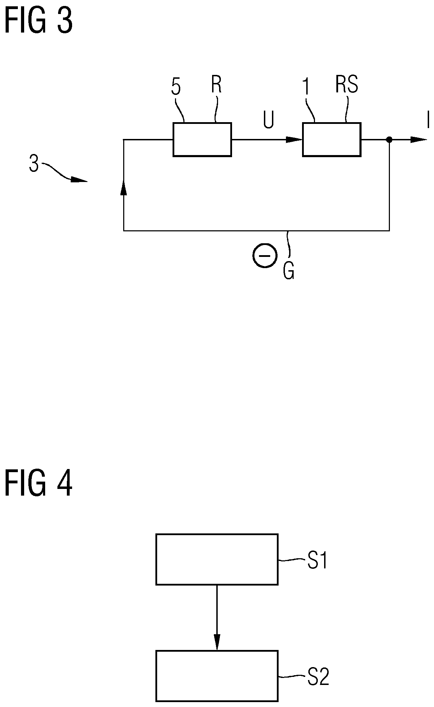

Figur 3 zeigt einen erfindungsgemäßen Regelkreis einer Regelkreiseinrichtung 3, wobei als Regler ein Umrichter 5 und als Regelstrecke RS verwendet werden. Der Umrichter 5 kann als Regler R beispielsweise eine elektrische Wechselspannung einer Ofenelektrode anlegen. Entsprechend kann aus der Ofenelektrode bzw. dem Lichtbogenofen 1 der fließende Lichtbogenstrom I erfasst werden. Sowohl die elektrische Wechselspannung U als auch der Lichtbogenstrom I können erfassbare Amplituden und Frequenzen aufweisen. Die in Figur 3 dargestellte einen elektrischen Umrichter 5 aufweisende Regelkreiseinrichtung 3 koppelt die Amplitude und/oder die Frequenz der Wechselspannung an einer Ofenelektrode zu der Amplitude und/oder der Frequenz des Lichtbogenstroms durch diese Ofenelektrode gegeneinander. Besonders vorteilhaft kann der Umrichter 5 einfach die Amplitude und/oder die Frequenz der elektrischen Wechselspannung der Ofenelektrode als Stellgröße (n) zur Regelung der Amplitude und/oder Frequenz des Lichtbogenstroms als geregelte Größe (n) einstellen.
Besonders vorteilhaft kann dann der Regelkreis der Regelkreiseinrichtung 3 mittels des Umrichters 5 die Amplitude und/oder die Frequenz der Wechselspannung bei einer Verkleinerung der Amplitude und/oder der Frequenz des Lichtbogenstroms vergrößern. Dies kann dazu benutzt werden, dass ein Lichtbogen stabil erzeugt ist und ein Abreißen des Lichtbogens vermieden wird. Das Gleiche kann zur Vermeidung von Flickern ausgeführt werden. Eine umgekehrte Einstellung einer Verkleinerung der Amplitude und/oder der Frequenz der Wechselspannung bei einer Vergrößerung der Amplitude und/oder der Frequenz des Lichtbogenstroms kann wirksam Überspannungen vermeiden. Grundsätzlich kann ein Umrichter 5 die Amplitude und/oder Frequenz des Lichtbogenstroms als Stellgröße (n) zur Regelung der Amplitude und/oder Frequenz der elektrischen Wechselspannung als geregelte Größe (n) einstellen. Entsprechend kann ein erfindungsgemäßer Umrichter 5 als eine eine Spannung bereitstellende Spannungsquelle und/oder als eine einen Strom einprägende Stromquelle betrachtet werden.

Figur 4 zeigt ein Ausführungsbeispiel eines erfindungsgemäßen Verfahrens. In einem ersten Schritt S1 verkleinern sich die Amplitude und/oder die Frequenz eines Lichtbogenstroms. Mit einem zweiten Schritt S2 wird mittels eines erfindungsgemäßen elektrischen Umrichters 5 die Amplitude und/oder die Frequenz der Wechselspannung an der Ofenelektrode vergrößert. Mit dieser entsprechenden Gegenkopplung kann ein Abreißen eines Lichtbogens und ein Flicker wirksam vermieden werden. Alternativ kann bei einem ersten Schritt S2 eine Vergrößerung der Amplitude und/oder der Frequenz eines Lichtbogenstroms erfasst werden, sodass in einem zweiten Schritt S2 mittels eines elektrischen Umrichters 5 und/oder die Frequenz der Wechselspannung verkleinert wird. Bei diesen beiden Varianten ist die Wechselspannung an der Ofenelektrode eine Stellgröße und der Lichtbogenstrom eine geregelte Größe.

## Patentansprüche

1. Vorrichtung zur dynamischen Einstellung eines an ein Leistungsversorgungsnetz elektrisch angeschlossenen Elektrolichtbogenofens (1) mit mindestens einer Netzphase, mittels der an eine Ofenelektrode eine elektrische Wechselspannung mit einer Amplitude und einer Frequenz angelegt und ein zum Schmelzen benötigter Lichtbogenstrom mit einer Amplitude und einer Frequenz zugeführt wird, wobei
eine einen elektrischen Umrichter (5) aufweisende Regelkreiseinrichtung (3) zur Gegenkopplung der Amplitude und/oder der Frequenz der Wechselspannung zu der Amplitude und/oder der Frequenz des Lichtbogenstroms ausgebildet ist,
der Umrichter (5) ein ein Eingangs-Tor (7) und ein Ausgangs-Tor (9) aufweisendes Zweitor (11) ist, wobei an dem Eingangs-Tor eine Netzleistungsversorgung und an dem Ausgangs-Tor eine Schmelzofenleistungsversorgung angeschlossen ist,
an dem Ausgangs-Tor (9) ein Primärkreis eines ersten Transformators (13) elektrisch angeschlossen ist, in dessen Sekundärkreis die Ofenelektrode des Elektrolichtbogenofens (1) elektrisch angeschlossen ist,
**dadurch gekennzeichnet, dass**
eine Primärspule eines zweiten Transformators (15) elektrisch parallel zu dem Eingangs-Tor (7) des Umrichters (5) geschaltet ist und eine Sekundärspule des ersten Transformators (13) elektrisch in Serie zu einer Sekundärspule des zweiten Transformators (15) geschaltet ist.

2. Vorrichtung gemäß Anspruch 1,
**dadurch gekennzeichnet, dass**
ein Verhältnis einer primären elektrischen Nennleistung des ersten Transformators (13) zu einer des zweiten Transformators (15) mittels entsprechender Dimensionierung einstellbar ist.

3. Vorrichtung gemäß Anspruch 2,
**dadurch gekennzeichnet, dass**
das Verhältnis der primären elektrischen Nennleistung des ersten Transformators (13) zu der des zweiten Transformators (15) 1:3 ist.

4. Vorrichtung gemäß Anspruch 1, 2 oder 3,
**dadurch gekennzeichnet, dass**
der erste Transformator (13) oder der zweite Transformator (15) ein bereits vorhandener Ofentransformator ist.

5. Vorrichtung gemäß einem der vorhergehenden Ansprüche,
**dadurch gekennzeichnet, dass**
der erste Transformator (13) ein Hochsetzsteller oder Boost-Transformator ist.

6. Vorrichtung gemäß einem der vorhergehenden Ansprüche,
**dadurch gekennzeichnet, dass**
der erste Transformator (13) entfernt ist und das Ausgangs-Tor (9) des Umrichters (5) elektrisch in Serie zu der Sekundärspule des zweiten Transformators (15) und zur Ofenelektrode geschaltet ist.

7. Vorrichtung gemäß einem der vorhergehenden Ansprüche,
**dadurch gekennzeichnet, dass**
der Umrichter (5) die Amplitude und/oder die Frequenz der elektrischen Wechselspannung als Stellgröße(n) zur Regelung der Amplitude und/oder Frequenz des Lichtbogenstroms als geregelte Größe(n) einstellt.

8. Vorrichtung gemäß einem der vorhergehenden Ansprüche,
**dadurch gekennzeichnet, dass**
der Umrichter (5) die Amplitude und/oder die Frequenz des Lichtbogenstroms als Stellgröße(n) zur Regelung der Amplitude und/oder Frequenz der elektrischen Wechselspannung als geregelte Größe(n) einstellt.

9. Vorrichtung gemäß einem der vorhergehenden Ansprüche,
**dadurch gekennzeichnet, dass**
der Umrichter (5) die Amplitude und/oder die Frequenz der Wechselspannung bei einer Verkleinerung der Amplitude und/oder der Frequenz des Lichtbogenstroms vergrößert und umgekehrt.

10. Vorrichtung gemäß einem der vorhergehenden Ansprüche 1 bis 8,
**dadurch gekennzeichnet, dass**
der Umrichter (5) die Amplitude und/oder die Frequenz des Lichtbogenstroms bei einer Vergrößerung der Amplitude und/oder der Frequenz der Wechselspannung verkleinert und umgekehrt.

11. Vorrichtung gemäß einem der vorhergehenden Ansprüche,
**dadurch gekennzeichnet, dass**
der Umrichter (5) eine Wechselgröße des Leistungsversorgungsnetzes phasensynchron in die Wechselgröße der Ofenelektrode umrichtet.

12. Vorrichtung gemäß einem der vorhergehenden Ansprüche,
**dadurch gekennzeichnet, dass**
der Umrichter (5) an eine beliebige Spannungsebene des elektrischen Leistungsversorgungsnetzes elektrisch anschließbar ist.

13. Vorrichtung gemäß einem der vorhergehenden Ansprüche,
**dadurch gekennzeichnet, dass**
der Elektrolichtbogenofen drei von drei Netzphasen leistungsversorgte Ofenelektroden, insbesondere Grafitelektroden, aufweist, wobei mittels drei Umrichter (3) Amplituden und/oder Frequenzen regelbar sind.

14. Vorrichtung gemäß Anspruch 13,
**dadurch gekennzeichnet, dass**
mittels der drei Umrichter (3) Amplituden und/oder Frequenzen getrennt regelbar sind.

15. Vorrichtung gemäß einem der vorhergehenden Ansprüche,
**dadurch gekennzeichnet, dass**
zusätzlich eine Abstandseinrichtung für die jeweilige Ofenelektrode deren Abstand zu einem Schmelzgut als ein Arbeitspunkt einstellt.

16. Vorrichtung gemäß einem der vorhergehenden Ansprüche,
**dadurch gekennzeichnet, dass**
ein Leistungsfaktor je Phase größer 0,84 ist.

17. Verfahren zur dynamischen Einstellung eines an ein Leistungsversorgungsnetz elektrisch angeschlossenen Elektrolichtbogenofens (1) mit mindestens einer Netzphase, mittels der an eine Ofenelektrode eine elektrische Wechselspannung mit einer Amplitude und einer Frequenz angelegt und ein zum Schmelzen benötigter Lichtbogenstrom mit einer Amplitude und einer Frequenz zugeführt wird, wobei
eine einen elektrischen Umrichter (5) aufweisende Regelkreiseinrichtung (3) die Amplitude und/oder die Frequenz der Wechselspannung zu der Amplitude und/oder der Frequenz des Lichtbogenstroms gegengekoppelt regelt,
der Umrichter (5) ein ein Eingangs-Tor (7) und ein Ausgangs-Tor (9) aufweisendes Zweitor (11) ist, wobei an dem Eingangs-Tor eine Netzleistung zugeführt und an dem Ausgangs-Tor eine Schmelzofenleistung abgegeben wird,
an dem Ausgangs-Tor (9) ein Primärkreis eines ersten Transformators (13) elektrisch angeschlossen ist, in dessen Sekundärkreis die Ofenelektrode des Elektrolichtbogenofens (1) elektrisch angeschlossen ist,
**dadurch gekennzeichnet, dass**
eine Primärspule eines zweiten Transformators (15) elektrisch parallel zu dem Eingangs-Tor (7) des Umrichters (5) geschaltet ist und eine Sekundärspule des ersten Transformators (13) elektrisch in Serie zu einer Sekundärspule des zweiten Transformators (15) geschaltet ist.

18. Verfahren gemäß Anspruch 17,
**dadurch gekennzeichnet, dass**
ein Verhältnis der primären elektrischen Nennleistung des ersten Transformators (13) zu der des zweite Transformators (15) mittels entsprechender Dimensionierung eingestellt wird.

19. Verfahren gemäß Anspruch 18,
**dadurch gekennzeichnet, dass**
das Verhältnis der primären elektrischen Nennleistung des ersten Transformators (13) zu der des zweiten Transformators (15) 1:3 eingestellt wird.

20. Verfahren gemäß Anspruch 17, 18 oder 19,
**dadurch gekennzeichnet, dass**
der erste Transformator (13) oder der zweite Transformator (15) ein bereits vorhandener Ofentransformator ist.

21. Verfahren gemäß einem der vorhergehenden Ansprüche 17 bis 20, **dadurch gekennzeichnet, dass**
der erste Transformator (13) ein Hochsetzsteller oder Boost-Transformator ist.

22. Verfahren gemäß einem der vorhergehenden Ansprüche 17 bis 21,
**dadurch gekennzeichnet, dass**
der erste Transformator (13) nicht vorhanden ist und das Ausgangs-Tor (9) des Umrichters (5) elektrisch in Serie zu der Sekundärspule des zweiten Transformators (15) und zur Ofenelektrode geschaltet ist.

23. Verfahren gemäß einem der vorhergehenden Ansprüche 17 bis 22,
**dadurch gekennzeichnet, dass**
der Umrichter (5) die Amplitude und/oder die Frequenz der elektrischen Wechselspannung als Stellgröße(n) zur Regelung der Amplitude und/oder Frequenz des Lichtbogenstroms als geregelte Größe(n) einstellt.

24. Verfahren gemäß einem der vorhergehenden Ansprüche 17 bis 23,
**dadurch gekennzeichnet, dass**
der Umrichter (5) die Amplitude und/oder die Frequenz des Lichtbogenstroms als Stellgröße(n) zur Regelung der Amplitude und/oder Frequenz der elektrischen Wechselspannung als geregelte Größe(n) einstellt.

25. Verfahren gemäß einem der vorhergehenden Ansprüche 17 bis 24,
**dadurch gekennzeichnet, dass**
der Umrichter (5) die Amplitude und/oder die Frequenz der Wechselspannung bei einer Verkleinerung der Amplitude und/oder der Frequenz des Lichtbogenstroms vergrößert und umgekehrt.

26. Verfahren gemäß einem der vorhergehenden Ansprüche 17 bis 24,
**dadurch gekennzeichnet, dass**
der Umrichter (5) die Amplitude und/oder die Frequenz des Lichtbogenstroms bei einer Vergrößerung der Amplitude und/oder der Frequenz der Wechselspannung verkleinert und umgekehrt.

27. Verfahren gemäß einem der vorhergehenden Ansprüche 17 bis 26,
**dadurch gekennzeichnet, dass**
der Umrichter (5) eine Wechselgröße des Leistungsversorgungsnetzes phasensynchron in die Wechselgröße der Ofenelektrode umrichtet.

28. Verfahren gemäß einem der vorhergehenden Ansprüche 17 bis 27,
**dadurch gekennzeichnet, dass**
der Umrichter (5) an eine beliebige Spannungsebene eines elektrischen Leistungsversorgungsnetzes elektrisch anschließbar ist.

29. Verfahren gemäß einem der vorhergehenden Ansprüche 17 bis 28,
**dadurch gekennzeichnet, dass**
der Elektrolichtbogenofen drei von drei Netzphasen leistungsversorgte Ofenelektroden, insbesondere Grafitelektroden, aufweist, wobei mittels drei Umrichter (3) Amplituden und/oder Frequenzen geregelt werden.

30. Verfahren gemäß Anspruch 29,
**dadurch gekennzeichnet, dass**
mittels der drei Umrichter (3) Amplituden und/oder Frequenzen getrennt regelbar sind.

31. Verfahren gemäß einem der vorhergehenden Ansprüche 17 bis 30,
**dadurch gekennzeichnet, dass**
zusätzlich eine Abstandseinrichtung für die jeweilige Ofenelektrode deren Abstand zu einem Schmelzgut als ein Arbeitspunkt einstellt.

32. Verfahren gemäß einem der vorhergehenden Ansprüche 17 bis 31,
**dadurch gekennzeichnet, dass**
bei jeder Ofenelektrode ein Leistungsfaktor je Phase größer 0,84 ist.

33. Verfahren gemäß einem der vorhergehenden Ansprüche 17 bis 32,
**dadurch gekennzeichnet, dass**
eine Regelung eines Lichtbogens im Millisekunden-Bereich ausgeführt wird.

34. Verfahren gemäß einem der vorhergehenden Ansprüche 17 bis 33,
**dadurch gekennzeichnet, dass**
bei einem Stromnulldurchgang zusätzlich ein Zündimpuls aufgeschaltet wird.

## Claims

1. Apparatus for dynamically adjusting an electric arc furnace (1) electrically connected to a power supply system with at least one system phase, by means of which an alternating electrical voltage is applied with an amplitude and frequency to a furnace electrode and an arc current required for melting is supplied with an amplitude and frequency, wherein
a control loop device (3) comprising an electrical converter (5) is designed for reverse feedback of the amplitude and/or the frequency of the alternating voltage to the amplitude and/or the frequency of the arc current,
the converter (5) is a two-port network (11) comprising an input port (7) and an output port (9), wherein a power supply system is attached to the input port and a melting furnace power supply is connected to the output port,
a primary circuit of a first transformer (13) is electrically connected to the output port (9), in the secondary circuit of which the furnace electrode of the electric arc furnace (1) is electrically connected,
**characterized in that**
a primary coil of a second transformer (15) is electrically connected in parallel to the input port (7) of the converter (5), and a secondary coil of the first transformer (13) is electrically connected in series with a secondary coil of the second transformer (15).

2. Apparatus according to Claim 1,
**characterized in that**
a ratio of a primary electric rated power of the first transformer (13) to one of the second transformer (15) can be adjusted by means of appropriate dimensioning.

3. Apparatus according to Claim 2,
**characterized in that** the ratio of the primary electric rated power of the first transformer (13) to that of the second transformer (15) is 1:3.

4. Apparatus according to Claim 1, 2 or 3,
**characterized in that**
the first transformer (13) or the second transformer (15) is a furnace transformer that is already present.

5. Apparatus according to one of the previous claims,
**characterized in that**
the first transformer (13) is a step-up or boost transformer.

6. Apparatus according to one of the previous claims,
**characterized in that**
the first transformer (13) is removed, and the output port (9) of the converter (5) is electrically connected in series with the secondary coil of the second transformer (15) and to the furnace electrode.

7. Apparatus according to one of the previous claims,
**characterized in that**
the converter (5) adjusts the amplitude and/or the frequency of the alternating electrical voltage as the manipulated variable (n) for controlling the amplitude and/or frequency of the arc current as the controlled variable (n).

8. Apparatus according to one of the previous claims,
**characterized in that** the converter (5) adjusts the amplitude and/or the frequency of the arc current as the manipulated variable (n) for controlling the aptitude and/or frequency of the alternating electrical voltage as the controlled variable (n).

9. Apparatus according to one of the previous claims,
**characterized in that** the converter (5) increases the amplitude and/or the frequency of the alternating voltage when the amplitude and/or the frequency of the arc current is reduced, and vice versa.

10. Apparatus according to one of the previous Claims 1 to 8,
**characterized in that**
the converter (5) reduces the amplitude and/or the frequency of the arc current when the amplitude and/or frequency of the alternating voltage increases, and vice versa.

11. Apparatus according to one of the previous claims,
**characterized in that**
the converter (5) converts an alternating magnitude of the power supply system into the alternating magnitude of the furnace electrode with phase synchronicity.

12. Apparatus according to one of the previous claims,
**characterized in that**
the converter (5) can be electrically connected to any desired voltage level of the electrical power supply system.

13. Apparatus according to one of the previous claims,
**characterized in that**
the electric arc furnace comprises three furnace electrodes, in particular graphite electrodes, supplied with power by three system phases, wherein amplitudes and/or frequencies can be regulated by means of three converters (3).

14. Apparatus according to Claim 13
**characterized in that** amplitudes and/or frequencies can be controlled separately by means of the three converters (3).

15. Apparatus according to one of the previous claims,
**characterized in that**
a spacing device for the respective furnace electrodes additionally adjusts their distance from a melt as a working point.

16. Apparatus according to one of the previous claims
**characterized in that**
a power factor of each phase is greater than 0.84.

17. Method for dynamically adjusting an electric arc furnace (1) electrically connected to a power supply system with at least one system phase, by means of which an alternating electrical voltage is applied with an amplitude and frequency to a furnace electrode and an arc current required for melting is supplied with an amplitude and frequency, wherein
a control loop device (3) comprising an electrical converter (5) controls, with reverse feedback, the amplitude and/or the frequency of the alternating voltage to the amplitude and/or the frequency of the arc current,
the converter (5) is a two-port network (11) comprising an input port (7) and an output port (9), wherein mains power is supplied to the input port and melting furnace power is delivered at the output port,
a primary circuit of a first transformer (13) is electrically connected to the output port (9), in the secondary circuit of which the furnace electrode of the electric arc furnace (1) is electrically connected,
**characterized in that**
a primary coil of a second transformer (15) is electrically connected in parallel to the input port (7) of the converter (5), and a secondary coil of the first transformer (13) is electrically connected in series with a secondary coil of the second transformer (15).

18. Method according to Claim 17,
**characterized in that**
a ratio of the primary electrical rated power of the first transformer (13) to that of the second transformer (15) is adjusted by means of appropriate dimensioning.

19. Method according to Claim 18,
**characterized in that** the ratio of the primary electric rated power of the first transformer (13) to that of the second transformer (15) is set as 1:3.

20. Method according to Claim 17, 18 or 19,
**characterized in that**
the first transformer (13) or the second transformer (15) is a furnace transformer that is already present.

21. Method according to one of the previous Claims 17 to 20,
**characterized in that**
the first transformer (13) is a step-up or boost transformer.

22. Method according to one of the previous Claims 17 to 21,
**characterized in that**
the first transformer (13) is not present, and the output port (9) of the converter (5) is electrically connected in series with the secondary coil of the second transformer (15) and to the furnace electrode.

23. Method according to one of the previous Claims 17 to 22,
**characterized in that**
the converter (5) adjusts the amplitude and/or the frequency of the alternating electric voltage as the manipulated variable (n) for controlling the amplitude and/or frequency of the arc current as the controlled variable (n).

24. Method according to one of the previous Claims 17 to 23,
**characterized in that**
the converter 5) adjusts the amplitude and/or the frequency of the arc current as the manipulated variable (n) for controlling the amplitude and/or frequency of the alternating electrical voltage as the controlled variable (n).

25. Method according to one of the previous Claims 17 to 24,
**characterized in that**
the converter (5) increases the amplitude and/or the frequency of the alternating voltage when the attitude and/or the frequency of the arc current is reduced, and vice versa.

26. Method according to one of the previous Claims 17 to 24,
**characterized in that**
the converter (5) reduces the amplitude and/or the frequency of the arc current when the amplitude and/or the frequency of the alternating voltage increases, and vice versa.

27. Method according to one of the previous Claims 17 to 26,
**characterized in that**
the converter (5) converts an alternating magnitude of the power supply system into the alternating magnitude of the furnace electrode with phase synchronicity.

28. Method according to one of the previous Claims 17 to 27,
**characterized in that**
the converter (5) can be electrically connected to any desired voltage level of an electrical power supply system.

29. Method according to one of the previous Claims 17 to 28,
**characterized in that**
the electric arc furnace comprises three furnace electrodes, in particular graphite electrodes, supplied with power by three system phases, wherein amplitudes and/or frequencies are regulated by means of three converters (3).

30. Method according to Claim 29,
**characterized in that**
amplitudes and/or frequencies can be controlled separately by means of the three converters (3).

31. Method according to one of the previous Claims 17 to 30,
**characterized in that**
a spacing device for the respective furnace electrodes additionally adjusts their distance from a melt as a working point.

32. Method according to one of the previous Claims 17 to 31,
**characterized in that**
at each furnace electrode, a power factor of each phase is greater than 0.84.

33. Method according to one of the previous Claims 17 to 32,
**characterized in that**
a regulation of an arc is carried out in the range of milliseconds.

34. Method according to one of the previous Claims 17 to 33,
**characterized in that**
an ignition pulse is additionally injected at a zero transition of the current.

## Revendications

1. Dispositif de réglage dynamique d'un four (1) à arc électrique raccordé électriquement à un réseau d'alimentation de puissance, comprenant au moins une phase de réseau au moyen de laquelle une tension alternative électrique, d'une certain amplitude et d'une certaine fréquence, est appliquée à une électrode du four et un courant d'arc électrique, d'une certaine amplitude et d'une certaine fréquence et nécessaire à la fusion, est amené, dans lequel
un dispositif (3) à circuit de réglage, ayant un convertisseur (5) électrique, est constitué pour contrer l'amplitude et/ou la fréquence de la tension alternative par rapport à l'amplitude et/ou à la fréquence du courant d'arc électrique,
le convertisseur (5) est un deux portes (11) ayant une porte (7) d'entrée et une porte (9) de sortie, une alimentation de puissance du réseau étant raccordée à la porte d'entrée et une alimentation de puissance du four électrique à la porte de sortie,
à la porte (9) de sortie est raccordé électriquement un circuit primaire d'un premier transformateur (13) au circuit secondaire duquel est raccordée électriquement l'électrode du four (1) à arc électrique,
**caractérisé en ce que**
une bobine primaire d'un deuxième transformateur (15) est montée électriquement en parallèle avec la porte (7) d'entrée du convertisseur (5), et une bobine secondaire du premier transformateur (13) est montée électriquement en série avec une bobine secondaire du deuxième transformateur (15).

2. Dispositif suivant la revendication 1,
**caractérisé en ce qu'**
un rapport d'une puissance nominale électrique primaire du premier transformateur (13) à l'une du deuxième transformateur (15) peut être réglé au moyen d'un dimensionnement adéquat.

3. Dispositif suivant la revendication 2,
**caractérisé en ce que**
le rapport de la puissance nominale électrique primaire du premier transformateur (13) à celle du deuxième transformateur (15) est de 1:3.

4. Dispositif suivant la revendication 1, 2 ou 3,
**caractérisé en ce que** le premier transformateur (13) ou le deuxième transformateur (15) est un transformateur du four déjà présent.

5. Dispositif suivant l'une des revendications précédentes,
**caractérisé en ce que**
le premier transformateur (13) est un convertisseur élévateur ou un transformateur boost.

6. Dispositif suivant l'une des revendications précédentes,
**caractérisé en ce que** le premier transformateur (13) est éloigné et la porte (9) de sortie du convertisseur (5) est montée électriquement en série avec la bobine secondaire du deuxième transformateur (15) et avec l'électrode du four.

7. Dispositif suivant l'une des revendications précédentes,
**caractérisé en ce que**
le convertisseur (5) règle l'amplitude et/ou la fréquence de la tension alternative électrique comme grandeur(s) réglante(s) pour réguler l'amplitude et/ou la fréquence du courant d'arc électrique comme grandeur(s) réglée(s).

8. Dispositif suivant l'une des revendications précédentes,
**caractérisé en ce que**
le convertisseur (5) règle l'amplitude et/ou la fréquence du courant d'arc électrique comme grandeur(s) réglante(s) pour la régulation de l'amplitude et/ou de la fréquence de la tension alternative électrique comme grandeur(s) réglée (s).

9. Dispositif suivant l'une des revendications précédentes,
**caractérisé en ce que**
le convertisseur (5) augmente l'amplitude et/ou la fréquence de la tension alternative lorsque l'amplitude et/ou la fréquence du courant d'arc électrique diminue et inversement.

10. Dispositif suivant l'une des revendications précédentes 1 à 8,
**caractérisé en ce que**
le convertisseur (5) diminue l'amplitude et/ou le fréquence du courant d'arc électrique lorsque l'amplitude et/ou la fréquence de la tension alternative augmente et inversement.

11. Dispositif suivant l'une des revendications précédentes,
**caractérisé en ce que**
le convertisseur (5) transforme une grandeur alternative du réseau d'alimentation de puissance d'une manière synchrone en phase en la grandeur alternative de l'électrode du four.

12. Dispositif suivant l'une des revendications précédentes,
**caractérisé en ce que**
le convertisseur (5) peut être raccordé électriquement à n'importe quel plan de tension du réseau d'alimentation de puissance électrique.

13. Dispositif suivant l'une des revendications précédentes,
**caractérisé en ce que**
le four à arc électrique a trois électrodes de four alimentées en puissance par trois phases de réseau, notamment des électrodes en graphite, les amplitudes et/ou les fréquences étant réglables au moyen de trois convertisseurs (3).

14. Dispositif suivant la revendication 13,
**caractérisé en ce que**
des amplitudes et/ou des fréquences sont réglables de manière séparée au moyen des trois convertisseurs (3).

15. Dispositif suivant l'une des revendications précédentes,
**caractérisé en ce qu'**
en plus d'un dispositif de mise à distance pour chaque électrode du four, sa distance à un produit fondu est réglée sous la forme d'un point de travail.

16. Dispositif suivant l'une des revendications précédentes,
**caractérisé par**
un facteur de puissance par phase supérieur à 0,84.

17. Procédé de réglage dynamique d'un four (1) à arc électrique raccordé électriquement à un réseau d'alimentation de puissance, comprenant au moins une phase de réseau au moyen de laquelle une tension alternative électrique, d'une certain amplitude et d'une certaine fréquence, est appliquée à une électrode du four et un courant d'arc électrique, d'une certaine amplitude et d'une certaine fréquence et nécessaire à la fusion, est amené, dans lequel
un dispositif (3) de circuit de réglage, ayant un convertisseur (5) électrique, règle l'amplitude et/ou la fréquence de la tension alternative par rapport à l'amplitude et/ou la fréquence du courant d'arc électrique,
le convertisseur (5) est un deux portes (11) ayant une porte (7) d'entrée et une porte (9) de sortie, une puissance du réseau étant amenée à la porte d'entrée et une puissance de four de fusion étant cédée à la porte de sortie,
à la porte (9) de sortie est raccordé électriquement un circuit primaire d'un premier transformateur (13), au circuit secondaire duquel est raccordée électriquement l'électrode du four (1) à arc électrique,
**caractérisé en ce que**
une bobine primaire d'un deuxième transformateur (15) est montée électriquement, parallèle avec la porte (7) d'entrée du convertisseur (5), et une bobine secondaire du premier transformateur (13) est montée électriquement en série avec une bobine secondaire du deuxième transformateur (15).

18. Procédé suivant la revendication 17,
**caractérisé en ce que**
l'on règle un rapport de la puissance nominale électrique primaire du premier transformateur (13) à l'une du deuxième transformateur (15) au moyen d'un dimensionnement adéquat.

19. Procédé suivant la revendication 18,
**caractérisé en ce que**
l'on règle le rapport de la puissance nominale électrique primaire du premier transformateur (13) à celle du deuxième transformateur (15) à 1:3.

20. Procédé suivant la revendication 17, 18 ou 19,
**caractérisé en ce que**
le premier transformateur (13) ou le deuxième transformateur (15) est un transformateur du four déjà présent.

21. Procédé suivant l'une des revendications précédentes 17 à 20,
**caractérisé en ce que**
le premier transformateur (13) est un convertisseur élévateur ou un transformateur boost.

22. Procédé suivant l'une des revendications précédentes 17 à 21,
**caractérisé en ce qu'**
il n'y a pas de premier transformateur (13) et la porte (9) de sortie du convertisseur (5) est montée électriquement en série avec la bobine secondaire du deuxième transformateur (15) et avec l'électrode du four.

23. Procédé suivant l'une des revendications précédentes 17 à 22,
**caractérisé en ce que**
le convertisseur (5) règle l'amplitude et/ou la fréquence de la tension alternative électrique comme grandeur(s) réglante (s) pour réguler l'amplitude et/ou la fréquence du courant d'arc électrique comme grandeur (s) réglée (s).

24. Procédé suivant l'une des revendications précédentes 17 à 23,
**caractérisé en ce que**
le convertisseur (5) règle l'amplitude et/ou la fréquence du courant d'arc électrique comme grandeur(s) réglante(s) pour la régulation de l'amplitude et/ou de la fréquence de la tension alternative électrique comme grandeur (s) réglée(s).

25. Procédé suivant l'une des revendications précédentes 17 à 24,
**caractérisé en ce que**
le convertisseur (5) augmente l'amplitude et/ou la fréquence de la tension alternative lorsque l'amplitude et/ou la fréquence du courant d'arc électrique diminue et inversement.

26. Procédé suivant l'une des revendications précédentes 17 à 24,
**caractérisé en ce que**
le convertisseur (5) diminue l'amplitude et/ou le fréquence du courant d'arc électrique lorsque l'amplitude et/ou la fréquence de la tension alternative augmente et inversement.

27. Procédé suivant l'une des revendications précédentes 17 à 26,
**caractérisé en ce que**
le convertisseur (5) transforme une grandeur alternative du réseau d'alimentation de puissance d'une manière synchrone en phase en la grandeur alternative de l'électrode du four.

28. Procédé suivant l'une des revendications précédentes 17 à 27,
**caractérisé en ce que**
le convertisseur (5) peut être raccordé électriquement à n'importe quel plan de tension du réseau d'alimentation de puissance électrique.

29. Procédé suivant l'une des revendications précédentes 17 à 28,
**caractérisé en ce que**
le four à arc électrique a trois électrodes de four alimentées en puissance par trois phases du réseau, notamment des électrodes en graphite, des amplitudes et/ou des fréquences étant réglées au moyen de trois convertisseurs (3).

30. Procédé suivant la revendication 29,
**caractérisé en ce que**
des amplitudes et/ou des fréquences sont réglables de manière séparée au moyen des trois convertisseurs (3).

31. Procédé suivant l'une des revendications précédentes 17 à 30,
**caractérisé en ce qu'**
en plus d'un dispositif de mise à distance pour chaque électrode du four, sa distance à un produit fondu est réglée sous la forme d'un point de travail.

32. Procédé suivant l'une des revendications précédentes 17 à 31,
**caractérisé en ce qu'**
un facteur de puissance par phase supérieur à 0,84.

33. Procédé suivant l'une des revendications précédentes 17 à 32,
**caractérisé en ce que**
l'on effectue un réglage du four électrique dans le domaine de la milliseconde.

34. Procédé suivant l'une des revendications précédentes 17 à 33,
**caractérisé en ce qu'**
au passage par zéro du courant, on applique supplémentairement une impulsion d'amorçage.
